(19) Europäisches Patentamt
European Patent Office
Office européen des brevets

(11) Veröffentlichungsnummer : **0 131 179**
**B1**

(12) # EUROPÄISCHE PATENTSCHRIFT

(45) Veröffentlichungstag der Patentschrift : **16.06.87**

(21) Anmeldenummer : **84106985.9**

(22) Anmeldetag : **19.06.84**

(51) Int. Cl.[4] : **C 08 F226/00**, C 08 F226/06, C 22 B 3/00 // (C08F226/00, 226:06, 230:08, 230:06),(C08F226/06, 226:00, 230:08, 230:06)

(54) **Copolymerisat, Verfahren zu seiner Herstellung und seine Verwendung als Sorptionsmittel.**

(30) Priorität : **09.07.83 DE 3324834**

(43) Veröffentlichungstag der Anmeldung : **16.01.85 Patentblatt 85/03**

(45) Bekanntmachung des Hinweises auf die Patenterteilung : **16.06.87 Patentblatt 87/25**

(84) Benannte Vertragsstaaten : **AT BE CH DE FR GB IT LI NL SE**

(56) Entgegenhaltungen : **DE-A- 3 043 766**
**US-A- 3 817 745**

(73) Patentinhaber : **CASSELLA Aktiengesellschaft**
**Hanauer Landstrasse 526**
**D-6000 Frankfurt am Main 61 (DE)**

(72) Erfinder : **Keil, Karl-Heinz, Dr.**
**Lübecker Weg 3**
**D-6450 Hanau-Mittelbuchen (DE)**
Erfinder : **Greiner, Ulrich, Dr.**
**Nidderauer Strasse 13**
**D-6369 Schöneck 1 (DE)**
Erfinder : **Engelhardt, Fritz, Dr.**
**Hünfelder Strasse 20**
**D-6000 Frankfurt am Main 61 (DE)**
Erfinder : **Kühlein, Klaus, Dr.**
**Fasanenstrasse 41**
**D-6233 Kelkheim/Ts (DE)**
Erfinder : **Keller, Reinhold, Dr.**
**Wiesenweg 5**
**D-6232 Bad Soden/Ts (DE)**
Erfinder : **Schlingmann, Merten, Dr.**
**Schneidhainer Strasse 32a**
**D-6240 Königstein (DE)**

(74) Vertreter : **Urbach, Hans-Georg, Dr. et al**
**Hanauer Landstrasse 526**
**D-6000 Frankfurt am Main 61 (DE)**

**EP 0 131 179 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein vernetztes, poröses perlförmiges Copolymerisat, ein Verfahren zu seiner Herstellung und seine Verwendung als Sorptionsmittel, insbesondere zur Abtrennung saurer Substanzen aus Lösungsmitteln.

Die Abtrennung von Carbon- und Mineralsäuren aus Lösungsmitteln wird in der Technik zunehmend wichtiger. Diese Abtrennung kann mit Austauscherharzen vorgenommen werden. So ist in der JA-PS 24561/1971 ein Verfahren zum Abtrennen von Carbonsäuren mit basischen Anionenaustauschern vom Styroltyp beschrieben. Bei diesem Verfahren ist die Menge der sorbierten Carbonsäure nur gering, und außerdem muß die Desorption mit Aceton und Kohlendioxidgas unter einem Druck von 0,5 bis 20 bar durchgeführt werden, was insbesondere in großtechnischem Maßstab einen erheblichen Aufwand erfordert.

Aus der DE-C2-30 43 766 ist ein Verfahren zur Gewinnung von Carbonsäuren aus einer wäßrigen Lösung bekannt, bei dem als Sorptionsmittel eine vernetzte polymere Verbindung eingesetzt wird, die eine Pyridin-Skelettstruktur aufweist. Als Vernetzer sind Divinylbenzol, Divinylphthalat und Ethylenglykoldiacrylat genannt. Zur Desorption wird ein aliphatischer Alkohol, ein Keton oder ein Carbonester verwendet. Die Kapazität des verwendeten Sorptionsmittels ist jedoch noch zu gering und außerdem quillt das Sorptionsmittel zu stark, so daß sich der Strömungswiderstand bzw. die Durchflußzeit erhöht.

Es wurde nun überraschenderweise gefunden, daß das erfindungsgemäße Copolymerisat ein hohes Sorptionsvermögen für saure Substanzen und ein geringes Quellvermögen besitzt. Das erfindungsgemäße vernetzte poröse, perlförmige Copolymerisat enthält 71,4 bis 99,9 Gew.% wiederkehrende Einheiten einer eine einzige polymerisierbare olefinische Gruppe enthaltenden Pyridyl-, Chinolyl-, Isochinolyl- oder Pyrazinyl-Verbindung oder mehrerer derartiger Verbindungen, 0,1 bis 28,6 Gew.% Einheiten eines n-valenten Vernetzers oder mehrerer n-valenter Vernetzer und 0 bis 25 Gew.% Einheiten einer polymerisierbaren silizium- und/oder bor-organischen Verbindung oder mehrerer derartiger Verbindungen und, bezogen auf 100 Gew.% der Summe der vorgenannten Einheiten, 5 bis 350 Gew.% Einheiten eines N-Vinyl-amids der allgemeinen Formel I $CH_2=CH—N(R^1)—C(R^2) = 0$, worin $R^1$ Wasserstoff, Methyl oder Ethyl und $R^2$ Wasserstoff oder $(C_1$-$C_3)$Alkyl bedeuten, oder mehrerer derartiger N-Vinylamide und 0 bis 40 Gew.% Einheiten einer anderen polymerisierbaren Verbindung oder mehrerer derartiger Verbindungen, wobei n eine Zahl gleich oder größer als 2 ist, und die Pyridyl-, Chinolyl-, Isochinolyl- oder Pyrazinyl-Verbindung auch noch einen weiteren oder mehrere weitere Substituenten besitzen kann.

$R^2$ kann neben Wasserstoff Methyl, Ethyl, Propyl oder Isopropyl bedeuten. Vorzugsweise bedeuten $R^1$ und $R^2$ unabhängig voneinander Wasserstoff oder Methyl.

In vielen Fällen enthält das Copolymerisat, bezogen auf 100 Gew.% Einheiten der Polymerisierbaren heterocyclischen Verbindungen, Einheiten der Vernetzei und evtl. vorhandene Einheiten polymerisierbarer bor- und/oder silizium-organischer Verbindungen anstelle von 0 bis 40 Gew.% Einheiten anderer polymerisierbarer Verbindungen, zweckmäßigerweise nur 0 bis 25 Gew.% Einheiten von anderen polymerisierbaren Verbindungen. Bezogen auf die bereits genannten 100 Gew.% Einheiten der polymerisierbaren heterocyclischen Verbindungen, der Vernetzer und der evtl. vorhandenen bor- und/oder silizium-organischen Verbindungen, können in dem Copolymerisat z. B. 10 bis 40 Gew.-%, vorzugsweise 10 bis 110 Gew.%, ganz besonders bevorzugt 10 bis 250 Gew.% Einheiten eines oder mehrerer N-Vinylamide der allgemeinen Formel I vorhanden sein.

Vorzugsweise enthält das erfindungsgemäße Copolymerisat 80 bis 99 Gew.% Einheiten einer eine polymerisierbare olefinische Gruppe enthaltenden Pyridyl-, Chinolyl-, Isochinolyl- oder Pyrazinyl-Verbindung oder mehrerer derartiger Verbindungen, 1 bis 20 Gew.% Einheiten eines n-valenten Vernetzers oder mehrerer n-valenter Vernetzer und 0 bis 19 Gew.% Einheiten einer polymerisierbaren silizium- und/oder bor-organischen Verbindung oder mehrerer derartiger Verbindungen und, bezogen auf 100 Gew.% der Summe der vorgenannten Einheiten, 10 bis 250 Gew.% Einheiten eines N-Vinyl-amids der allgemeinen Formel I oder mehrerer derartiger N-Vinyl-amide, und 0 bis 25 Gew.% Einheiten einer anderen polymerisierbaren Verbindung oder mehrerer derartiger Verbindungen, wobei n die bereits genannte Bedeutung besitzt und die Pyridyl-, Chinolyl-, Isochinolyl- oder Pyrazinyl-Verbindung auch noch einen weiteren oder mehrere weitere Substituenten besitzen kann.

Besonders bevorzugt sind auch solche erfindungsgemäßen Copolymerisate, die mindestens 0,1 Gew.%, vorzugsweise 0,1 bis 10 Gew.% Einheiten polymerisierbarer silizium- und/oder bor-organischer Verbindungen enthalten, insbesondere dann, wenn diese Verbindungen gleichzeitig als Einheiten n-valenter Vernetzer wirken.

Bevorzugt sind auch solche erfindungsgemäßen Copolymerisate, die keine Einheiten anderer polymerisierbarer Verbindungen enthalten.

Das erfindungsgemäße Copolymerisat enthält Einheiten einer eine polymerisierbare olefinische Gruppe enthaltenden Pyridyl-, Chinolyl-, Isochinolyl- oder Pyrazinyl-Verbindung oder mehrerer derartiger Verbindungen, ferner Einheiten eines oder mehrerer Vernetzer sowie Einheiten eines oder mehrerer N-Vinylamide. Das erfindungsgemäße Copolymerisat kann gegebenenfalls weiterhin Einheiten einer oder mehrerer polymerisierbarer silizium- und/oder bor-organischer Verbindungen und Einheiten einer oder mehrerer anderer polymerisierbarer Verbindungen enthalten. Unter Einheiten werden dabei die im

Copolymerisat statistisch verteilten Gruppen verstanden, die aus den zur Herstellung des Copolymerisats eingesetzten polymerisierbaren monomeren Verbindungen entstanden sind.

Die polymerisierbare olefinische Gruppe der Pyridyl-, Chinolyl-, Isochinolyl- oder Pyrazinyl-Verbindung ist in der Regel direkt, gegebenenfalls aber auch indirekt, z. B. über ein Sauerstoff- oder Schwefelatom, an den Kern gebunden und besitzt normalerweise die Formel II

$$-(CH_2)_m-C(R^3)=C(R^4)H \qquad (II)$$

worin $R^3$, $R^4$ unabhängig voneinander Wasserstoff oder $(C_1\text{-}C_4)$Alkyl und m eine Zahl von 0 bis 4 bedeuten. Für die Reste $R^3$, $R^4$ ist die Kombination $H/CH_3$ bzw. $CH^3/H$ oder H/H bevorzugt. Für m ist 1, insbesondere aber 0 bevorzugt.

Die eine polymerisierbare olefinische Gruppe enthaltende Pyridyl-, Chinolyl-, Isochinolyl- oder Pyrazinyl-Verbindung besitzt, falls sie weitere Substituenten enthält, insbesondere einen, zwei oder drei $(C_1\text{-}C_4)$Alkyl- und/oder OH-Substituenten. Die Alkylsubstituenten können, ebenso wie die Alkylreste $R^3$, $R^4$, geradkettig oder verzweigt sein. Die eine polymerisierbare olefinische Gruppe enthaltende Pyridyl-, Chinolyl-, Isochinolyl- oder Pyrazinyl-Verbindung ist insbesondere durch einen oder zwei Alkylreste oder durch eine OH-Gruppe oder durch eine OH-Gruppe und einen Alkylrest substituiert.

Die in dem erfindungsgemäßen Copolymerisat enthaltenden wiederkehrenden Einheiten der, eine polymerisierbare olefinische Gruppe enthaltenden Pyridyl-, Chinolyl-, Isochinolyl- oder Pyrazinyl-Verbindung besitzen daher normalerweise die Formel III

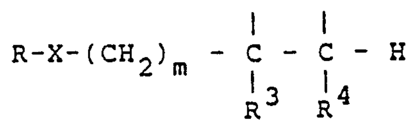

. (III)

worin R Pyridyl-, Chinolyl-, Isochinolyl- oder Pyrazinyl, $R^3$, $R^4$ Wasserstoff oder $(C_1\text{-}C_4)$Alkyl, X = —O— oder —S— oder $-(CH_2)_m-$, wobei m eine Zahl von 0 bis 4, vorzugsweise 1 oder insbesondere 0, X also insbesondere eine direkte Bindung bedeuten und der Rest R auch ein- oder mehrfach, insbesondere durch $(C_1\text{-}C_4)$Alkyl und/oder OH-Gruppen substituiert sein kann. Als Alkylsubstituent für R kommt vorzugsweise Methyl oder Ethyl in Betracht. In den wiederkehrenden Einheiten der Formel III des Copolymerisats können die Rest R und/oder $R^3$ und/oder $R^4$ gleich oder verschieden sein. Polymerisierbare olefinische Gruppen sind insbesondere die Vinyl-, Allyl-, Methallyl- oder Isopropenylgruppe.

Geeignete Verbindungen einer, eine polymerisierbare olefinische Gruppe enthaltenden Pyridyl-, Chinolyl-, Isochinolyl- oder Pyrazinyl-Verbindung sind beispielsweise : 2-Vinyl-pyridin, 3-Vinyl-pyridin, 4-Vinyl-pyridin, 3-Isopropenyl-pyridin, 2-Vinyl-5-methyl-pyridin, 2-Methyl-5-vinyl-pyridin, 3-Methyl-5-vinyl-pyridin, 2,4-Dimethyl-6-vinyl-pyridin, 3-Methyl-4-vinyl-pyridin, 3-Ethyl-4-vinyl-pyridin, 3-Methyl-2-vinyl-pyridin, 3-Ethyl-2-vinyl-pyridin, 4-Methyl-4-vinyl-chinolin, 2-Methyl-5-vinyl-chinolin, 1-Methyl-5-vinyl-isochinolin, 2-Isopropenyl-chinolin, 2-Vinyl-pyrazin, 2-Vinyl-5-ethyl-pyridin, 2-Vinyl-4,6-dimethyl-pyridin, 2-Vinyl-chinolin, 2-Methyl-3-vinyl-8-hydroxy-chinolin. Von den Pyridyl-, Chinolyl-, Isochinolyl- oder Pyrazinyl-Verbindungen sind die Pyridyl-Verbindungen, insbesondere Verbindungen der Vinyl-pyridine, vor allem das 4-Vinyl-pyridin, bevorzugt.

Bis zu 50 Gew.% der im Copolymerisat enthaltenen Einheiten einer eine polymerisierbare olefinische Gruppe enthaltenden Pyridyl-, Chinolyl-, Isochinolyl- oder Pyrazinyl-Verbindung können durch Einheiten einer eine polymerisierbare olefinische Gruppe enthaltenden heterocylischen 5-Ringverbindung, die im Ring mindestens ein protonierbares Stickstoffatom besitzt, oder mehrerer derartiger Verbindungen ersetzt sein. Für die polymerisierbare olefinische Gruppe der genannten heterocyclischen 5-Ringverbindung gelten die gleichen Ausführungen wie für die polymerisierbare olefinische Gruppe der Pyridyl-, Chinolyl-, Isochinolyl- oder Pyrazinyl-Verbindung. Die heterocyclische 5-Ringverbindung kann z. B. ein, zwei, drei oder vier Stickstoffatome besitzen, von denen mindestens eines protonierbar sein muß, wobei der heterocyclische Ring gegebenenfalls auch noch ein anderes Heteroatom oder mehrere andere Heteroatome, insbesondere Sauerstoff und/oder Schwefel, enthalten kann. Protonierbare Stickstoffatome sind basische Stickstoffatome mit einem freien Elektronenpaar, die in dem 5-Ring z. B. als —N =, —NH— oder $-\underset{|}{N}-$ eingebaut sind.

Stickstoffatome, die z. B. einer Ketogruppe benachbart sind, besitzen keine basischen Eigenschaften mehr und können daher nicht mehr protoniert werden. Der heterocyclische 5-Ring kann gesättigt, teilweise gesättigt oder ungesättigt sein und beispielsweise ein Imidazol, Imidazolin, Oxazol, Oxazolin, Oxazolidin, Thiazol, Oxadiazol, Pyrrol, Triazol oder Tetrazol darstellen und kann gegebenenfalls noch eine oder mehrere $(C_1\text{-}C_4)$Alkyl- und/oder $(C_2\text{-}C_4)$Hydroxyalkylgruppen besitzen. Polymerisierbare olefinische Gruppen sind insbesondere die Vinyl-, Allyl-, Methallyl- oder Isopropenylgruppe. Als eine polymerisierbare olefinische Gruppe enthaltende heterocyclische 5-Ringverbindung, die im Ring mindestens ein protonierbares Stickstoffatom besitzt, sind z. B. zu nennen : 1-Vinyl-1,2,3-triazol, 1-Vinyl-1,2,4-triazol, 4-Vinyl-1,2,3-triazol, 5-Vinyl-1,2,3-triazol, 1-Vinyl-1,2,3,4-tetrazol, 2-Vinyl-1,2,3,4-tetrazol, 2-Allyl-1,2,3,4-tetrazol, 1-Allyl-1,2,3,4-tetrazol, 1-Methyl-5-vinyl-1,2,3,4-tetrazol, 2-Methyl-5-vinyl-1,2,3,4-tetrazol, 3-Vinyl-1,2,4-oxadiazol, 3-Vinyl-5-methyl-1,2,4-oxadiazol, 3-Isopropenyl-1,2,4-oxadiazol, 2-Isopropenyl-1,3,4-oxadiazolin-5-on, 3-Isopropenyl-1,2,4-oxadiazol, 3-Isopropenyl-5-methyl-1,2,4-oxadiazol, 2-Vinyl-oxazolin, 2-Isopropenyl-oxazolin, 2-Vinyl-3-methyl-oxazolidin, 2-Vinyl-thiazol, 4-Vinyl-thiazol, 1-Vinyl-2-imidazolin, 2-Vinyl-4-(oder 5-)-methyl-2-imidazolin, 1-Vinyl-2-methyl-2-imidazolin, 1-Vinyl-imidazol, 1-Methyl-2-vinyl-imidazol, 1-Vinyl-2-methyl-imidazol, 1-Vinyl-4-(2-hydroxyethyl)-imidazol, N-Vinyl-pyrrol, 2-Isopropenyl-2-imidazolin, 2-Vinyl-3-methyl-2-imidazolin, 1-Vinyl-2,4-dimethyl-imidazol.

Von den eine polymerisierbare olefinische Gruppe enthaltenden heterocyclischen 5-Ringverbindungen, die im Ring mindestens ein protonierbares Stickstoffatom besitzen, sind die Vinyl-imidazole, insbesondere das 1-Vinyl-imidazol, bevorzugt.

Der Vernetzer verknüpft n Polymerenketten miteinander, wobei n eine Zahl gleich oder größer als 2 ist. Insbesondere ist n = 2, 3 oder 4, vorzugsweise 2.

Geeignete Vernetzer sind beispielsweise Verbindungen, die n polymerisierbare Reste, insbesondere der Formeln $CH_2{=}CH—$, $CH_2{=}CH—CH_2—$ oder $CH_2{=}CH(R^5)—CO—$ bzw. $CH_2{=}CH(R^5)—CO—O—$ im Molekül enthalten, wobei n die bereits genannte Bedeutung, normalerweise 2, 3 oder 4, vorzugsweise 2 oder 3, besitzt und $R^5$ Wasserstoff oder $(C_1$-$C_4)$Alkyl, insbesondere Wasserstoff oder Methyl, bedeutet. Beispiele für derartige Vernetzer sind : Triallyl-cyanurat, Triallylphosphat, N,N',N''-Tris-acryloylperhydrotriazin, 1,2,3-Trivinyloxypropan, Tetraallyloxyethan, Pentaallyl-saccharose, Triallyl-amin, N,N',N''-Tris-(2-acryloyloxyethyl-bzw.-methacryloyloxy-ethyl)-isocyanurat, Ethenphosphonsäure-di-allylester, Ethylenglykol-1,2-bis-(ethenphosphonsäureester), ferner allgemein Verbindungen der Formeln IV, V oder VI

$$(CH_2{=}CH)_n—R^6 \qquad (IV)$$

$$(CH_2{=}CH—CH_2)_n—R^7 \qquad (V)$$

$$(CH_2{=}CH(R^5)—CO)_n—R^8 \qquad (VI)$$

worin $R^5$ die bereits genannte Bedeutung, n normalerweise 2, 3 oder 4, vorzugsweise 2 oder 3, bedeutet und $R^7$ der durch Entfernung von n aciden H-Atomen entstandene Rest einer Di-, Tri-, Tetra- oder Polycarbonsäure und $R^8$ der durch Entfernung von n Hydroxyl-Wasserstoffatomen entstandene Rest eines Di-, Tri-, Tetra- oder Polyols und $R^6$ der durch Entfernung von n Wasserstoffatomen entstandene Rest eines aliphatischen, aromatischen oder heteroaromatischen Kohlenwasserstoffs darstellen.

Geeignete Vernetzer der Formel IV sind Divinyl-benzole, insbesondere 1,4-Divinylbenzol, Trivinylbenzole, Divinylpyridine, Divinylchinoline.

Beispiele für geeignete Vernetzer der Formel V sind Triallyl-tricarballylat, Triallyl-aconitat, Triallylcitrat, Triallyl-trimesinat, Triallyl-trimellitat, Diallyl-oxalat, Divinylphthalat, Diallylmaleat, -fumarat, -adipat, -phthalat.

Beispiele für geeignete Vernetzer der Formel VI sind Trimethylolpropan-tri-acrylat und -methacrylat, Pentaerylthrit-tetra-acrylat und -methacrylat, Pentaerythrit-triacrylat und -methacrylat, Dimethylenglykoldiacrylat oder -dimethacrylat, Butylenglykoldiacrylat oder -dimethacrylat.

Verbindungen der allgemeinen Formel VI sind z. B. die Diacrylate und die Dimethylacrylate des Ethylenglykols, des Diethylenglykols und der Polyethylenglykole 200 bis 600.

Geeignete Vernetzer sind ferner z. B. Diallylamin, Divinylketon, Divinylsulfon, Diallylmelamin.

Überraschenderweise können auch wasserlösliche Vernetzer, wie z. B. Derivate der Acryl- bzw. Methacryl-säure, wie z. B. N,N'-Methylen-bis-acrylamid, N,N'-Methylen-bis-methacrylamid, N,N'-Methylen-bis-(N-hydroxymethyl-methacrylamid), N,N'-Bis-(methacryloyl)-aminoessigsäure, N,N'-Bis-(acryloyl)-aminoessigsäure, 1,2-Bis-(acrylamido)-1,2-dihydroxy-ethan, 1,2-Bis-(methacrylamido)-1,2-dihydroxy-ethan, 1,2-Bis-(N-hydroxymethyl-methacrylamido)-1,2-di-hydroxy-ethan, 1,2-Bis-(N-methoxymethyl-methacrylamido)-1,2-dimethyloxy-ethan, 1,6-Bis-(acrylamido)-hexan, 1,6-Bis-(methacrylamido)-hexan, 2-Methyl-1,4-bis-(acrylamido)-butan (« Isovalerilyden-bis-acrylamid »), 2-Methyl-1,4-bis-(methacrylamido)-butan (« Isovalerilyden-bis-methacrylamid »), Diacrylate und Dimethacrylate des Ethylenglykols, Diethylenglykols und der Polyglykole 200 bis 600 in Kombination mit den oben genannten Vernetzern der Formeln IV, V und VI eingesetzt werden.

Günstig sind auch Kombinationen von zwei oder mehreren Venetzern, z. B. von N,N'-Methylen-bis-acrylamid/N,N-Bis-(acryloyl)-aminoessigsäure ; N,N'-Methylen-bis-acrylamid/-Isovalenilyden-bis-acrylamid ; N,N'-Methylen-bis-acrylamid/Ethylenglykol-1,2-bis-(ethenphosphonsäureester). Bevorzugte Vernetzerkombinationen können als eine Vernetzerkomponente nicht nur N,N'-Methylen-bis-acrylamid und/oder N,N'-Methylen-bis-methacrylamid, sondern auch die Diacrylate und/oder Dimethacrylate des Ethylenglykols, Diethylenglykols oder der Polyethylenglykole 200 bis 600 oder N,N',N''-Tris-(2-acryloyloxyethyl)-isocyanurat oder N,N',N''-Tris-(2-methacryloyloxyethyl)-isocyanurat enthalten, Trimethylolpropantriacrylat, Trimethylol-propan-trimethacrylat, Pentaerythrit-trimethacrylat, Pentaerythrit-triacrylat, Butandiol-1,4-dimethacrylat, Butandiol-1,4-diacrylat, Hexandiol-1,6-diacrylat und Hexandiol-1,6-dimethacrylat mit N,N'-Methylen-bis-acrylamid und/oder N,N'-Methylen-bis-methacrylamid.

Geeignete n-valente Vernetzer sind jedoch auch solche Verbindungen, die nur eine oder zwei

polymerisierbare olefinische Doppelbindungen im Molekül enthalten, die aber aufgrund von Sekundärreaktionen zusätzlich (n-1) bzw. (n-2) Polymerenketten miteinander verknüpfen können. Derartige Vernetzer sind z. B. Alkoxy-Gruppen enthaltende Silane, bei denen die Alkoxy-Gruppen in wäßrigem Medium intermediär zu Si—OH—Gruppen hydrolysiert werden. Zwei derartige Silanolgruppen bewirken dann unter Kondensation und Ausbildung einer Siloxanbindung Si—O—Si die Verknüpfung zweier Ketten. Beispiele für geeignete derartige Vernetzer sind die später angegebenen silizium-organischen Verbindungen, soweit sie 1 oder 2 olefinische Doppelbindungen und (n-1) bzw. (n-2) Alkoxygruppen enthalten.

Geeignete N-Vinyl-amide der allgemeinen Formel I sind z. B. N-Vinyl-N-formamid, N-Vinyl-acetamid, N-Vinyl-N-methyl-acetamid, N-Vinyl-N-methyl-formamid, N-Vinyl-N-ethyl-acetamid, N-Vinyl-propionamid, N-Vinyl-N-methyl-propionamid, N-Vinyl-N-ethyl-propionamid, N-Vinyl-butyramid, N-Vinyl-N-methyl-butyramid, N-Vinyl-N-ethyl-butyramid. Besonders geeignet sind N-Vinyl-formamid und insbesondere N-Vinyl-N-methyl-acetamid. Die N-Vinyl-amide der allgemeinen Formel I bauen in das erfindungsgemäße Copolymerisat Einheiten der allgemeinen Formel VII ein

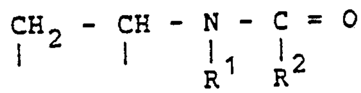 (VII)

wobei $R^1$ und $R^2$ die bereits genannten Bedeutungen besitzen.

Von den polymerisierbaren silizium- oder bor-organischen Verbindungen sind die polymerisierbaren silizium-organischen Verbindungen bevorzugt. Geeignete polymerisierbare silizium-organische Verbindungen sind z. B. polymerisierbare olefinische Gruppen enthaltende Silane, Siloxane und Silazane.

Geeignete polymerisierbare silizium- und bor-organische Verbindungen sind beispielsweise Acryl- bzw. Methacrylsäure-3-(trimethoxy-silyl)-propyl-ester, Acryl- bzw. Methacrylsäure-3-(triethoxy-silyl-)-propyl-ester, Acryl- bzw. Methacrylsäure-3-(tri(methoxyethoxy)-silyl)-propyl-ester, Acryl- bzw. Methacrylsäure-3-(tri(methoxyethoxyethoxy)-silyl)-propyl-ester, Acryl- bzw. Methacrylsäure-3-(di-(methoxy)-methyl-silyl)-propyl-ester, Acryl- bzw. Methacrylsäure-3-(di-(ethoxy)-ethyl-silyl)-propyl-ester, Vinyl-tri-ethoxy-silan, Vinyl-tri-methoxy-silan, Vinyl-tri-allyloxy-silan, Allyl-tri-allyloxy-silan, Vinyl-methyl-di-ethoxy-silan, Vinyl-methyl-di-methoxy-silan, Vinyl-tri-acetoxy-silan, Vinyl-tri-(methoxyethoxy)-silan, 1,3-Di-vinyl-1,1,3,3-tetramethyl-disiloxan, 1,3-Di-vinyl-1,1,3,3-tetra-methyl-disilazan,
$CH_2{=}CH{-}COO{-}(CH_2)_3{-}(Si{-}(CH_3)_p{-}O)_3{-}Si(CH_3)_2{-}(CH_3)_2{-}O{-}CO{-}CH{=}CH_2$,
$CH_2{=}C(CH_3){-}COO{-}(CH_2)_3{-}(Si(CH_3)_2{-}O)_p{-}Si(CH_3)_2{-}(CH_3)_2{-}O{-}CO{-}C(CH_3){=}CH_2$,
wobei p eine Zahl von 1 bis 20, insbesondere eine Zahl von 1 bis 10, bedeutet, $CH_2{=}CH{-}CH_2{-}NH{-}SiH(CH_3){-}N(CH_2CH{=}{-}CH_2){-}SiH(CH_3){-}NH{-}CH_2{-}CH{=}CH_2$, Triallyl-borsäureester, Trimethallyl-borsäureester. Die polymerisierbaren silizium- oder bor-organischen Verbindungen können auch, falls die Voraussetzungen hierfür vorliegen, gleichzeitig als polymerisierbare silizium- oder bor-organische Verbindungen und als Vernetzer eingesetzt werden.

Geeignete andere polymerisierbare Verbindungen sind solche, die keiner der vorgenannten gruppen angehören und nur eine polymerisierbare olefinische Gruppe im Molekül besitzen und die in geringer Menge in das Copolymerisat eingebaut werden können, ohne seine Eigenschaften wesentlich zu verändern, so z. B. Acrylsäure-β-hydroxyethylester, Methacrylsäure-β-hydroxyethylester, Styrol, Acryl- nitril, Methacrylnitril.

Die erfindungsgemäßen, porösen, perlförmigen Copolymerisate werden durch Perlpolymerisation von 71,4 bis 99,9 Gew.% einer oder mehrerer eine einzige polymerisierbare olefinische Gruppe enthaltenden Pyridyl-, Chinolyl-, Isochinolyl- oder Pyrazinyl-Verbindungen, 0,1 bis 28,6 Gew.% eines oder mehrerer n-valenter Vernetzer und 0 bis 25 Gew.% einer oder mehrerer polymerisierbarer silizium- oder bororganischer Verbindungen und, bezogen auf 100 Gew.% der Summe der vorgenannten Verbindungen, 5 bis 350 Gew.% eines oder mehrerer N-Vinyl-amide der Formel I und 0 bis 40 Gew.% einer oder mehrerer anderer polymerisierbarer Verbindungen, wobei n die bereits genannte Bedeutung besitzt und die Pyridyl-, Chinolyl-, Isochinolyl- oder Pyrazinyl-Verbindung(en) auch, wie bereits angegeben, substituiert sein können, hergestellt.

Vorzugsweise werden bei der Copolymerisation 80 bis 99 Gew.% einer oder mehrerer eine polymerisierbare olefinische Gruppe enthaltender Pyridyl-, Chinolyl-, Isochinolyl- oder Pyrazinyl-Verbindungen, 1 bis 20 Gew.% eines oder mehrerer n-valenter Vernetzer und 0 bis 19 Gew.% einer oder mehrerer polymerisierbarer silizium- und/oder bororganischer Verbindungen und, bezogen auf 100 % der Summe der vorgenannten Verbindungen, 10 bis 250 Gew.% eines oder mehrerer N-Vinyl-amide der allgemeinen Formel I und 0 bis 25 Gew.% Einheiten einer anderen polymerisierbaren Verbindung oder mehrerer derartiger Verbindungen eingesetzt.

Ganz besonders bevorzugt werden bei der Copolymerisation keine Verbindungen aus der Gruppe der anderen polymerisierbaren Verbindungen und/oder 0,1 bis 10 Gew.% einer oder mehrerer polymerisierbarer bor- und/oder siliziumorganischer Verbindungen eingesetzt.

Von den Pyridyl-, Chinolyl-, Isochinolyl- oder Pyrazinyl-Verbindungen werden bevorzugt die Pyridylverbindungen, insbesondere Vinyl-pyridine, besonders bevorzugt das 4-Vinyl-pyridin, eingesetzt. Bei der Copolymerisation können bis zu 50 Gew.% der eingesetzten Pyridyl-, Chinolyl-, Isochinolyl- oder

Pyrazinyl-Verbindung durch eine oder mehrere der bereits genannten heterocyclischen 5-Ringverbindungen mit einer polymerisierbaren olefinischen Gruppe und mindestens einem protonierbaren Stickstoffatom ersetzt werden, insbesondere durch 1-Vinyl-imidazol.

Die polymerisierbaren Monomeren können dabei in der Regel in handelsüblicher Form, also ohne vorherige Reinigung, eingesetzt werden.

Die Copolymerisation erfolgt nach dem Verfahren der Perlpolymerisation (vgl. z. B. Houben-Weyl : Methoden der organischen Chemie, 4. Auflage, Band 14,1 (1961), Makromolekulare Stoffe, Teil 1, Seite 406 ff). Bei der Perlpolymerisation wird das zu polymerisierende Monomerengemisch in der Regel in Wasser oder einer anderen Flüssigkeit, in der die Monomeren und das entstehende Copolymerisat unlöslich sind, durch mechanisches Rühren oder Schütteln, vorzugsweise unter Mitwirkung einer oder mehrerer geeigneter Dispergatoren zu der gewünschten Perlgröße zerteilt und anschließend copolymerisiert. Die Copolymerisation wird in an sich bekannter Weise, z. B. durch UV-Licht, energiereiche Strahlung, in der Regel aber durch einen im Monomerengemisch löslichen, Radikale liefernden Initiator ausgelöst. Geeignete Initiatoren sind z. B. Benzoylperoxid, tert-Butylhydro-peroxid, Cymol-peroxid, Methylethylketon-peroxid, Lauroyl-peroxid, tert-Butylperbenzoat, tert-Butyldiperphthalat, Azodiisobutyronitril, 2,2'-Azobis-(2,4-dimethylvaleronitril), 2-Phenyl-azo-2,4-dimethyl-4-methoxy-valeronitril, 2-Cyano-2-propyl-azoformamid, Azodiisobutyramid, Dimethyl-, Diethyl- oder Dibutyl-azobis-methylvalerat. Bezogen auf die Monomerenmenge (einschließlich Vernetzer) werden etwa 0,01 bis 2 Gew.%, vorzugsweise 0,1 bis 1 Gew.% Initiator angewandt.

Als Dispergatoren werden wasserlösliche oder wasserlöslich gemachte Naturstoffe, insbesondere Kohlenhydrate und Eiweißstoffe, z. B. löslich gemachte Stärke, Methylstärke, Methylcellulose oder andere Celluloseether, Methylhydroxypropylcellulose, Celluloseglykolat, ferner Cholesterin, Saponin, Leim, Tragant etc. oder wasserlösliche hochmolekulare synthetische Emulgatoren, wie z. B. Polyvinylalkohol, Polyacrylate oder Polymethacrylate in Mengen von 0,05 bis 3 Gew.%, vorzugsweise 0,1 bis 1 Gew.%, bezogen auf die vorhandene Wassermenge, verwendet.

Es ist zweckmäßig, die Perlpolymerisation in Gegenwart von Salzen, wie z. B. Natriumchlorid oder Natriumnitrit, insbesondere von Natriumformiat, durchzuführen, die in der wäßrigen Phase aufgelöst werden. Ferner ist es zweckmässig, die Polymerisation unter Ausschluß von Sauerstoff durchzuführen. Dies kann z. B. in bekannter Weise durch Spülen bzw. Durchleiten eines Inertgases, wie z. B. Stickstoff, erfolgen. Die Perlpolymerisation wird normalerweise bei Temperaturen von 45 bis 95 °C, vorzugsweise 55 bis 85 °C, durchgeführt und ist in der Regel nach 0,3 bis 3 h beendet. Nach beendeter Polymerisation wird das erhaltene perlförmige Copolymerisat abgetrennt, mit Wasser oder einem organischen Lösungsmittel gewaschen und getrocknet.

Das erfindungsgemäße vernetzte Copolymerisat liegt in Form poröser Perlen vor, deren Durchmesser durch die Wahl der Herstellungsbedingungen im Bereich von ca. 2 bis 0,04 mm wählbar ist. Bei gegebenen Herstellungsbedingungen werden Perlen mit einem engen Durchmesserspektrum erhalten. Das erfindungsgemäße Copolymerisat liegt insbesondere in Form von Perlen mit einem Durchmesser von 0,02 bis 0,2 mm, vorzugsweise 0,02 bis 0,1 mm, vor und ist hervorragend als Sorptionsmittel, insbesondere als Sorptionsmittel für saure Substanzen aus Lösungsmitteln geeignet. Unter sauren Substanzen werden im Rahmen der vorliegenden Erfindung solche Substanzen der allgemeinen Formel HA verstanden, die in einem Lösungsmittel der allgemeinen Formel Lm (in der Regel Wasser oder ein Wasser enthaltendes Lösungsmittelgemisch) in $LmH^+$ und einem Säurerest $A^-$ dissoziieren können. Derartige saure Substanzen sind z. B. Carbonsäuren, Sulfonsäuren, Mineralsäuren, Thiocarbonsäuren, Phenole, Thiophenole, Merkaptane, Säureimide, Säuresulfimide. Die genannten sauren organischen Substanzen können auch substituiert sein und/oder mehrere gleiche oder verschiedene saure Gruppen im Molekül enthalten.

Geeignete aliphatische und aromatische Mono-, Di- und Polycarbonsäuren, Hydroxy- und Ketocarbonsäuren, sind z. B. Ameisensäure, Essigsäure, Propionsäure, n-Buttersäure, i-Buttersäure, n-Valeriansäure, Trimethylessigsäure, Capronsäure, n-Heptylsäure, Caprylsäure, Caprinsäure, Pelargonsäure, Stearinsäure, Talgfettsäure, Fluoressigsäure, Chloressigsäure, Bromessigsäure, Jodessigsäure, Dichloressigsäure, 2-Chlorpropionsäure, Glykolsäure, Milchsäure, Methoxyessigsäure, Thioglykolsäure, Cyanessigsäure, Glyoxylsäure, Malonsäure, Acrylsäure, Methacrylsäure, Vinylessigsäure, Phenylessigsäure, Oxalsäure, Bernsteinsäure, Glutarsäure, Adipinsäure, Maleinsäure, Fumarsäure, Phthalsäure, Isophthalsäure, Terephthalsäure, Zitronensäure, Äpfelsäure, Benzilsäure, Aconitsäure, Trimesinsäure, Benzoesäure, Zimtsäure, Mandelsäure, Weinsäure, Salicylsäure, Acetoessigsäure, Hydroxybenzoesäure, Gallussäure, Dihydroxybenzoesäure. Ferner sind z. B. geeignet 6-Aminopenicillansäure und 7-Aminocephalosporansäure.

Geeignete Mineralsäuren sind z. B. Schwefelsäure, Phosphorsäure, Phosphorige-Säure, Salzsäure.

Besonders geeignet sind die erfindungsgemäßen Copolymerisate auch zur Sorption von Sulfonsäuren, wie z. B. Benzolsulfonsäure oder Naphthalin-1- oder -2-sulfonsäure oder Naphthalin- oder Benzol-di- oder -polysulfonsäuren, insbesondere auch zur Sorption von substituierten Sulfonsäuren, z. B. der Benzol-, Naphthalin- und Anthrachinonreihe, wie sie zum Teil bei der Fabrikation von Farbstoffen, insbesondere Azofarbstoffen, verwendet werden. Derartige Sulfonsäuren können z. B. Mono-, Di- oder Trisulfonsäuren sein und z. B. durch Hydroxy, Amino, Carboxy, Halogen, Nitro, Alkyl mit 1 bis 4 C-Atomen ein- oder mehrfach substituiert sein. Derartige Sulfonsäuren sind in der Farbstoffindustrie zum Teil unter

ihren Trivial- oder Entdeckernamen oder unter alphanumerischen Bezeichnungen (= « Buchstabensäuren ») bekannt. In der folgenden, beispielsweisen Auswahl für geeignete Sulfonsäuren sind jedoch derartige Sulfonsäuren unter ihren systematischen Bezeichnungen angegeben: 3-Methylbenzolsulfonsäure, Benzol-1,3-disulfonsäure, Methylbenzol-2,4-disulfonsäure, 2,4-Dimethylbenzolsulfonsäure, 2,5-Dimethyl-benzolsulfonsäure, 2,6-Dimethyl-4-tert-butyl-benzolsulfonsäure, Hydrinden-5-sulfonsäure, Benzaldehyd-2,4-disulfonsäure, 4-Chlor-benzolsulfonsäure, 2,5-Dichlorbenzolsulfonsäure, 2-Amino-benzolsulfonsäure, 3-Amino-benzolsulfonsäure, Aminobenzol-2,5-disulfonsäure, 1,3-Diaminobenzol-4-sulfonsäure, 1,3-Diaminobenzol-4,6-disulfonsäure, 1,4-Diaminobenzol-2,5-disulfonsäure, 2-Amino-5-methyl-benzolsulfonsäure, 2-Amino-3,5-dimethyl-benzolsulfonsäure, 2-Amino-4-sulfobenzoesäure, 2-Amino-5-sulfobenzoesäure, 2-Isobutylamino-5-sulfobenzoesäure, 2-Hydroxy-5-sulfobenzoesäure, 2-Aminophenyl-4-sulfonsäure, 3-Amino-4-methoxybenzolsulfonsäure, 2-Aminophenol-4,6-disulfonsäure, 2-Amino-5-chlorbenzolsulfonsäure, 3-Amino-4-chlorbenzolsulfonsäure, 2-Amino-4,5-dichlorbenzolsulfonsäure, 4-Amino-2,5-dichlorbenzolsulfonsäure, 2-Amino-5-chlor-4-methylbenzolsulfonsäure, 3-Amino-5-chlor-4-methylbenzolsulfonsäure, 4-Amino-5-chlor-3-methylbenzolsulfonsäure, 5-Amino-4-chlor-3-methylbenzolsulfonsäure, Anthrachinon-1-sulfonsäure, Anthrachino-2-sulfonsäure, Anthrachinon-1,5- und -1,8-disulfonsäure, Anthrachinon-2,6- und -2,7-disulfonsäure, 2-, 4-, 5- oder 7-Hydroxy-naphthalin-1-sulfonsäure, 6- oder 7-Hydroxy-naphthalin-2-sulfonsäure, 4- oder 7-Hydroxy-naphthalin-1,5-disulfonsäure, 4- oder 8-Hydroxy-naphthalin-1,6-disulfonsäure, 7-Hydroxy-naphthalin-1,3-disulfonsäure, 3-, 4- oder 5-Hydroxy-naphthalin-2,7-disulfonsäure, 4-Hydroxy-naphthalin-2,5-disulfonsäure, 6-Hydroxy-naphthalin-1,4-disulfonsäure, 6-Hydroxynaphthalin-1,7-disulfonsäure, 2-, 4-, 5-, 6-, 7- oder 8-Amino-naphthalin-1-sulfonsäure, 4-, 5-, 6-, 7- oder 8-Amino-naphthalin-2-sulfonsäure, 6- oder 7-Amino-naphthalin-1,3-disulfonsäure, 3- oder 4-Amino-naphthalin-1,5-disulfonsäure, 4- oder 8-Amino-naphthalin-1,6-disulfonsäure, 4-Amino-naphthalin-1,7-disulfonsäure, 4-Amino-naphthalin-2,6-disulfonsäure, 1-, 3- oder 4-Amino-naphthalin-2,5-disulfonsäure, 8-Amino-naphthalin-1,3,6-trisulfonsäure, 7-Amino-naphthalin-1,3,5-trisulfonsäure, 4-Amino-naphthalin-1,5,7-trisulfonsäure, 4-Amino-naphthalin-2,5,7-trisulfonsäure, 4-Amino-3- oder -5-hydroxynaphthalin-1-sulfonsäure, 6-, 7- oder 8-Amino-4-hydroxy-naphthalin-2-sulfonsäure, 2- oder 4-Amino-5-hydroxy-naphthalin-1,7-disulfonsäure, 4-Amino-5-hydroxy-naphthalin-1,3-disulfonsäure, 3- oder 4-Amino-5-hydroxy-naphthalin-2,7-disulfonsäure, 4,6- oder 6,7-Dihydroxy-naphthalin-2-sulfonsäure, Naphthalin-1,5-, -1,6-, -2,7-, -2,5-, -3,6-, oder -2,6-disulfonsäure, Naphthalin-1,5,7- oder -2,5,7-trisulfonsäure, 4-Hydroxy-naphthalin-2,5,7-trisulfonsäure, 4,5-Dihydroxy-naphthalin-2,7-disulfonsäure, 4-Hydroxy-7-phenylamino-naphthalin-2-sulfonsäure.

Auch sauer reagierende Salze von Sulfonsäuren, insbesondere saure reagierende Natrium- oder Ammoniumsalze, wie z. B. das Na-Salz der 6,7-Dihydroxy-naphthalin-2-sulfonsäure, das sogenannte G-Salz (Na-Salz der 6-Hydroxy-naphthalin-2,4-disulfonsäure) und das sogenannte R-Salz (Na-Salz der 6-Hydroxy-naphthalin-2,7-disulfonsäure) werden sorbiert.

Ferner sind geeignet: Thiophenol, m-Thiokresol, 2-Bromthio-p-kresol, Ethanthiol, Phenylmethanthiol, 1,4-Butandithiol, 4-Merkapto-2-pyridin-carbonsäure, 2,3-Dimerkapto-bernsteinsäure, Dithioessigsäure, Thioessig-O-säure, Thioessig-S-säure, Phthalimid, Succinimid, Benzolsulfimid.

In Gegenwart von Mineralsäuren werden durch die erfindungsgemäßen Copolymerisate Sulfonsäuren bevorzugt sorbiert. Die erfindungsgemäßen Copolymerisate eignen sich auch zur selektiven Sorption von Schwermetallionen, wie z. B. Zink-, Kupfer- oder Quecksilberionen aus wäßrigen Lösungen, insbesondere auch aus extrem verdünnten wäßrigen Lösungen. Vorzugsweise eignen sich die erfindungsgemäßen Copolymerisate zur Sorption von Carbonsäuren, insbesondere aus ihren wäßrigen Lösungen.

Die erfindungsgemäßen Copolymerisate weisen bei der Sorption von Carbonsäuren eine um mindestens 100 % höhere Sorptionskapazität als die Austauscher gemäß DE-C2-30 43 766 bei gleichzeitig geringerem Quellvermögen in Lösungsmitteln auf. Die Sorption wird in an sich bekannter Weise durchgeführt. In der Regel wird das Säulen- oder Festbettverfahren angewandt, bei dem das Sorptionsmittel in eine Säule gefüllt wird, die dann von dem eine oder mehrere saure Substanzen enthaltenden Lösungsmittel solange durchströmt wird, bis die Kapazität des Austauschers erschöpft ist. Anschließend erfolgt die Desorption der sorbierten sauren Stoffe ebenfalls in an sich bekannter Weise, so z. B. mit Laugen oder vorzugsweise mit Hilfe von organischen Lösungsmitteln, wie z. B. einem Alkohol, wie Methanol, Ethanol, i-Propanol, n-Butanol, einem Keton, wie Aceton, Methyl-ethyl-keton, Diethylketon, einem Ester, wie Essigsäure-methyl- oder -ethyl-ester, Essigsäureethylglykolester, Essigsäureethyldiglykolester, einem Ether, wie z. B. Tetrahydrofuran, Dioxan, Ethylenglykol-dimethyl- oder -diethylether. Die desorbierten sauren Substanzen können einer anderweitigen Verwendung zugeführt werden.

Die Sorption und Desorption saurer Substanzen mit Hilfe der erfindungsgemäßen Polymerisate kann auch nach anderen bekannten Sorptionsverfahren, wie z. B. nach kontinuierlichen Verfahren mit wanderndem Bett, nach dem Wirbelschichtverfahren oder im Satz-Betrieb durchgeführt werden.

Die Schwermetallionen werden ebenfalls in a sich bekannter Weise an den erfindungsgemäßen Adsorberharzen sorbiert und desorbiert.

Bei den erfindungsgemäßen Copolymerisaten wird durch den Gehalt an einem oder mehreren N-Vinyl-amiden der Formel I, z. B. die Sorption saurer Substanzen und vor allem die Desorption saurer Substanzen mittels organischer Lösungsmittel verbessert. Diese Verbesserung ist insbesondere bei Di- und Polycarbonsäuren, bei Aldehyd- und Ketocarbonsäuren, sowie bei höheren Gehalten an einem oder mehreren B-Vinyl-amiden der Formel I beträchtlich.

Die in den nachfolgenden Beispielen angegebenen Prozente sind Gewichtsprozente.

Beispiel 1

a) 50 g 4-Vinyl-pyridin, 5 g N-Vinyl-N-methyl-acetamid und 5 g Pentaerythrit-triacrylat werden zusammen mit 0,22 g Dibenzoylperoxid gelöst unter Durchleiten von Stickstoff und Rühren gelöst. Anschließend wird die erhaltene Monomerenmischung unter Rühren in eine Lösung aus 300 ml Wasser 37,5 g Natriumformiat und 37,5 g einer 1 %igen wäßrigen Hydroxyethylcellulose-Lösung gegeben. Dann wird unter ständigem Rühren und Durchleiten von Stickstoff angeheizt, wodurch bei 60 °C die Polymerisation einsetzt. Es wird bei 80 °C 1 h auspolymerisiert. Das erhaltene, hochvernetzte poröse perlförmige Copolymerisat wird mit Wasser gewaschen und getrocknet.

Die Ausbeute beträgt 54 g (ca. 90 % der Theorie).

b) Zu einem gleich guten Polymerisat mit einer porösen und vernetzten Struktur gelangt man, wenn anstelle von Pentaerythrit-triacrylat 5 g Pentaerythrit-trimethacrylat eingesetzt werden.

Zur Herstellung der Hydroxyethylcellulose-Lösung wird in diesem und den nachfolgenden Beispielen das Handelsprodukt « Tylose H 30 000 yp » der Fa. Hoechst AG, Frankfurt am Main 80, verwendet.

Beispiel 2

87,5 g 4-Vinyl-pyridin, 22,5 g N-Vinyl-N-methyl-acetamid und 10 g Trimethylolpropan-trimethacrylat werden zusammen mit 0,44 g Dibenzoylperoxid verrührt und unter ständigem Durchleiten von Stickstoff und ständigem Rühren in eine Lösung aus 600 ml Wasser, 75 g Natriumformiat und 75 g einer 1 %igen wäßrigen Hydroxyethylcellulose-Lösung gegeben und auf 60 bis 65 °C erwärmt, wodurch die Copolymerisation einsetzt und 1 h auspolymerisiert wird. Das erhaltene perlförmige Copolymerisat hat eine poröse Struktur und wird mit Wasser gewaschen und getrocknet.

Die Ausbeute beträgt 105 g.

Beispiel 3

a) 195 g 4-Vinyl-pyridin, 80 g N-Vinyl-formamid, 25 g Trimethylolpropan-triacrylat und 1,1 g Dibenzoylperoxid werden bei Zimmertemperatur gelöst und unter ständigem Durchleiten von Stickstoff und Rühren in eine Lösung von 1 500 ml Wasser, 187,5 g Natriumformiat und 187,5 g einer 1 %igen Hydroxyethylcellulose-Lösung gegeben. Dann wird auf 65 bis 70 °C geheizt und 2 h auspolymerisiert. Das erhaltene poröse perlförmige Copolymerisat wird abgtetrennt, mit Methanol gewaschen und getrocknet.

Die Ausbeute beträgt 285 g.

b) Ein poröses perlförmiges Copolymerisat mit einer gleich guten Oberflächenstruktur erhält man, wenn anstelle von 195 g 4-Vinyl-pyridin die gleiche Menge an 2-Vinyl-pyridin eingesetzt wird.

Beispiel 4

25 g 4-Vinyl-pyridin, 25 g N-Vinyl-N-methylacetamid, 10 g Trimethylolpropan-triacrylat und 0,176 g Dibenzoylperoxid werden bei Zimmertemperatur gelöst und unter ständigem Rühren in eine Lösung von 300 ml Wasser, 37,5 g Natriumformiat und 37,5 g einer 1 %igen Hydroxyethylcellulose-Lösung gegeben, auf 60 bis 65 °C erwärmt und 2 h auspolymerisiert. Das entstandene perlförmige Copolymerisat mit einer gut strukturierten porösen Oberfläche wird mit Methanol gewaschen und getrocknet.

Die Ausbeute beträgt 58 g.

Ein poröses perlförmiges Copolymerisat von gleicher Oberflächenstruktur erhält man, wenn man die angegebene Menge an 4-Vinyl-pyridin durch 2-Vinyl-6-methylpyridin ersetzt.

Beispiel 5

a) 45 g 4-Vinyl-pyridin, 5 g 1,7-Bis-(3-hydroxypropyl)-1,1,3,3,5,5,7,7-octamethyltetrasiloxan-bis-acrylat und 10 g N-Vinyl-formamid werden zusammen mit 0,22 g Dibenzoylperoxid gelöst und unter ständigem Durchleiten von Stickstoff und Rühren in eine Lösung aus 300 ml Wasser, 37,5 g Natriumformiat und 37,5 g einer 1 %igen wäßrigen Hydroxyethylcellulose-Lösung gegeben. Dann wird auf 70 °C angeheizt und 1 Stunde polymerisiert. Das erhaltene Copolymerisat wird mit Wasser gewaschen, dann anschließend mit Methanol digeriert und abgetrennt.

Die Ausbeute beträgt 55 g.

b) Zu einem gleich guten und hochvernetzten Copolymerisat gelangt man, wenn man anstelle von 1,7-Bis-(3-hydroxypropyl-1,1,3,3,5,5,7,7-octamethyl-tetrasiloxan-bis-acrylat die gleiche Menge Methacrylsäure-(3-triethoxysilyl-propyl)-ester einsetzt.

Beispiel 6

a) 22 g 4-Vinylpyridin, 33 g N-Vinyl-N-methyl-acetamid und 5 g Borsäuretriallylester werden

zusammen mit 0,22 g Dibenzoylperoxid gelöst und unter ständigem Durchleiten von Stickstoff und ständigem Rühren in eine Lösung aus 300 ml Wasser, 37,5 g Natriumformiat und 37,5 g einer 1 %igen wäßrigen Hydroxyethylcellulose-Lösung gegeben. Dann wird auf 60 °C erhitzt und 1 h polymerisiert. Das erhaltene poröse perlförmige Copolymerisat wird abgetrennt, mit Methanol gewaschen und getrocknet.

Die Ausbeute beträgt 57,5 g.

b) Zu gleich guten porösen perlförmigen Copolymerisaten gelangt man, wenn man anstelle von 5 g Borsäuretriallylester die gleiche Menge an Borsäuretrimethylallylester einsetzt.

Beispiel 7

40 g 4-Vinyl-chinolin, 15 g N-Vinyl-formamid und 5 g Pentaerythrit-triacrylat werden zusammen mit 0,22 g Dibenzoylperoxid gelöst und unter Durchleiten von Stickstoff und Rühren in 500 ml Toluol gegeben und bei 80 °C copolymerisiert. Das hochvernetzte poröse perlförmige Copolymerisat wird mit Toluol gewaschen und getrocknet.

Die Ausbeute beträgt 55 g.

Ein Produkt von den gleich guten Eigenschaften wird erhalten, wenn die angegebene Menge von 40 g 4-Vinyl-chinolin durch 4-Vinyl-isochinolin ersetzt wird.

Beispiel 8

49,5 g 4-Vinyl-pyridin, 5,5 g N-Vinyl-formamid, 5 g N-Vinyl-N-methylacetamid und 5 g Trimethylolpropan-trimethacrylat werden zusammen mit 0,22 g Dibenzoylperoxid gelöst und unter Durchleiten von Stickstoff und ständigem Rühren in eine Lösung aus 300 ml Wasser, 37,5 g Natriumformiat und 37,5 g einer 1 %igen wäßrigen Hydroxyethylcellulose-Lösung gegeben. Dann wird auf 70 bis 75 °C erhitzt und 1 h auspolymerisiert. Das erhaltene poröse perlförmige Polymerisat besitzt eine poröse Oberflächenstruktur und wird abgesaugt, mit Methanol digeriert und getrocknet.

Die Ausbeute beträgt : 60 g.

Ein Produkt mit einer gleich guten Oberflächenstruktur erhält man, wenn man anstelle von 5 g N-Vinyl-N-methylacetamid 5 g N-Vinyl-N-ethylacetamid einsetzt.

Beispiel 9

Zur Bestimmung der Adsorptionskapazität werden 50 g Copolymerisat in eine Glassäule mit einem Innendurchmesser von 25 mm gepackt und eine 1 %ige wäßrige D-Milchsäurelösung mit einer Geschwindigkeit von 1,8 Bettvolumina/h solange durchgeleitet, bis der Ablauf sauer ist. Zur Desorption von Milchsäure werden 650 ml Methanol mit einer Geschwindigkeit von 1,8 Bettvolumina/h durch die Säule geleitet und im Eluat die D-Milchsäure quantitativ enzymatisch mit Lactatdehydrogenase bestimmt.

Bei Verwendung verschiedener Copolymerisate werden die in der folgenden Tabelle angegebenen Adsorptionswerte erhalten.

| Copolymerisat gemäß Beispiel | Kapazität in g D-Milchsäure/ 100 g Copolymerisat |
|---|---|
| 1a | 22 |
| 3a | 25 |
| 5a | 74 |
| 5b | 76 |
| 6a | 54 |
| 1 der DE-C2-3 043 766 | 8 |

In gleicher Weise ist es möglich, mit den neuen erfindungsgemäßen Copolymerisaten, z. B. Ameisensäure, Essigsäure, Propionsäure, n-Buttersäure, i-Buttersäure, Valeriansäure, Capronsäure, Caprinsäure, Glykolsäure, Äpfelsäure, Malonsäure, Bernsteinsäure, Oxalsäure, Glutarsäure, Adipinsäure, Maleinsäure, Fumarsäure, Zitronensäure, Tricarballylsäure, Weinsäure, Glyoxylsäure und Phenole zu sorbieren und anschließend mit Lösungsmitteln, wie z. B. Aceton, Methanol, Essigsäurethylester, Tetrahydrofuran, Dioxan, Dimethoxyethan, wieder zu eluieren.

Beispiel 10

2 g des Produkts gemäß Beispiel 5b werden mit einem Wasser/Methanol-Gemisch (Volumenverhältnis 1 : 1) angeschlämmt und in eine Glassäule mit einem Durchmesser von 1,5 cm gefüllt. Die Schüttung wird mit 500 ml Wasser gewaschen.

Dann wird einer wäßrigen Lösung von $ZnCl_2$ mit einem pH-Wert von 2 und einem Gehalt von $10^{-6}$ g/ml auf die Säule gegeben und der $Zn^{++}$-Ionen-Gehalt im Durchlauf in den einzelnen Fraktionen bestimmt. In den ersten 1 280 ml des Durchlaufs liegt der Gehalt an $Zn^{++}$-Ionen unter $10^{-8}$ g/ml und steigt dann bis auf $1{,}2 \cdot 10^{-7}$ g/ml an.

Beispiel 11

49,5 g 4-Vinyl-pyridin, 40,5 g N-Vinyl-imidazol, 20 g N-Vinyl-N-methylacetamid und 10 g Trimethylolpropan-triacrylat werden zusammen mit 0,44 g Dibenzoylperoxid unter Durchleiten von Stickstoff und ständigem Rühren nach dem Lösen in eine Lösung aus 600 ml Wasser, 75 g Natriumformiat und 75 g einer 1 %igen wäßrigen Hydroxyethylcellulose-Lösung gegeben. Dann wird auf 70 bis 71 °C erhitzt und 1 h auspolymerisiert.

Das erhaltene perlförmige Polymerisat besitzt eine poröse Oberflächenstruktur. Es wird abgetrennt, mit Methanol gewaschen und getrocknet. Die Ausbeute beträgt 115 g.

**Patentansprüche** (für die Vertragsstaaten : BE, CH, DE, FR, GB, IT, LI, NL, SE)

1. Vernetztes perlförmiges poröses Copolymerisat, dadurch gekennzeichnet, daß es 71,4 bis 99,9 Gew.% wiederkehrender Einheiten einer eine einzige polymerisierbare olefinische Gruppe enthaltenden Pyridyl-, Chinolyl-, Isochinolyl- oder Pyrazinyl-Verbindung oder mehrerer derartiger Verbindungen, 0,1 bis 28,6 Gew.% Einheiten eines n-valenten Vernetzers oder mehrerer n-valenter Vernetzer und 0 bis 25 Gew.% Einheiten einer polymerisierbaren silizium- und/oder bor-organischen Verbindung oder mehrerer derartiger Verbindungen und, bezogen auf 100 Gew.% der Summe der vorgenannten Einheiten, 5 bis 350 Gew.% Einheiten eines N-Vinyl-amids der allgemeinen Formel I

$$CH_2=CH—N(R^1)—C(R^2) = 0,$$

worin $R^1$ Wasserstoff, Methyl oder Ethyl und $R^2$ Wasserstoff oder ($C_1$-$C_3$)-Alkyl bedeuten, oder mehrerer derartiger N-Vinyl-amide und 0 bis 40 Gew.% Einheiten einer anderen polymerisierbaren Verbindung oder mehrerer derartiger Verbindungen, wobei n eine Zahl gleich oder größer als 2 ist und die Pyridyl-, Chinolyl-, Isochinolyl- oder Pyrazinyl-Verbindung auch noch einen weiteren oder mehrere weitere Substituenten besitzen kann, enthält.

2. Copolymerisat nach Anspruch 1, dadurch gekennzeichnet, daß es 80 bis 99 Gew.% wiederkehrender Einheiten einer eine einzige polymerisierbare olefinische Gruppe enthaltenden Pyridyl-, Chinolyl-, Isochinolyl- oder Pyrazinyl-Verbindung oder mehrerer derartiger Verbindungen, 1 bis 20 Gew.% Einheiten eines n-valenten Vernetzers oder mehrerer n-valenter Vernetzer und 0 bis 19 Gew.% Einheiten einer polymerisierbaren silizium- und/oder bor-organischen verbindung oder mehrerer derartiger Verbindungen und, bezogen auf 100 Gew.% der Summe der vorgenannten Einheiten, 10 bis 250 Gew.% Einheiten eines N-Vinyl-amids der allgemeinen Formel I oder mehrerer derartiger N-Vinyl-amide, und 0 bis 25 Gew.% Einheiten einer anderen polymerisierbaren Verbindung oder mehrerer derartiger Verbindungen enthält.

3. Copolymerisat nach Anspruch 1 und/oder 2, dadurch gekennzeichnet, daß es 0,1 bis 10 Gew.% Einheiten einer polymerisierbaren bor- und/oder silizium-organischen Verbindung enthält.

4. Copolymerisat nach einem oder mehreren der Ansprüche 1 bis 3, dadurch gekennzeichnet, daß es keine Einheiten anderer polymerisierbarer Verbindungen enthält.

5. Copolymerisat nach einem oder mehreren der Ansprüche 1 bis 4, dadurch gekennzeichnet, daß es wiederkehrende Einheiten des Vinylpyridins enthält.

6. Copolymerisat nach einem oder mehreren der Ansprüche 1 bis 5, dadurch gekennzeichnet, daß bis zu 50 Gew.% der Einheiten der Pyridyl-, Chinolyl-, Isochinolyl- oder Pyrazinyl-Verbindung durch Einheiten einer eine polymerisierbare olefinische Gruppe enthaltenden heterocyclischen 5-Ringverbindung, die im Ring mindestens ein protonierbares Stickstoffatom besitzt, oder mehrerer derartiger Verbindungen, ersetzt werden.

7. Verfahren zur Herstellung des in den Ansprüchen 1 bis 6 angegebenen vernetzten, perlförmigen, porösen Copolymerisats durch Copolymerisation, dadurch gekennzeichnet, daß 71,4 bis 99,9 Gew.% einer oder mehrerer eine einzige polymerisierbare olefinische Gruppe enthaltenden Pyridyl-; Chinolyl-, Isochinolyl- oder Pyrazinyl-Verbindungen, 0,1 bis 28,6 Gew.% eines oder mehrerer n-valenter Vernetzer und 0 bis 25 Gew.% einer oder mehrerer polymerisierbarer silizium- und/oder bor-organischer Verbindungen und, bezogen auf 100 Gew.% der Summe der vorgenannten Verbindungen, 5 bis 350 Gew.% eines oder mehrerer N-Vinyl-amide der Formel I und 0 bis 40 Gew.% einer oder mehrerer anderer polymerisierbarer Verbindungen, wobei n eine Zahl gleich oder größer als 2 ist, nach dem Verfahren der Perlpolymerisation copolymerisiert werden.

8. Verfahren nach Anspruch 7, dadurch gekennzeichnet, daß 80 bis 99 Gew.% einer eine einzige polymerisierbare olefinische Gruppe enthaltenden Pyridyl-, Chinolyl-, Isochinolyl- oder Pyrazinyl-Verbindung oder mehrerer derartiger Verbindungen, 1 bis 20 Gew.% eines Vernetzers oder mehrerer derartiger Vernetzer, 0 bis 19 Gew.% einer oder mehrerer polymerisierbarer bor- und/oder silizium-organischer Verbindungen und, bezogen auf 100 % der Summe der vorgenannten Verbindungen, 10 bis 250 Gew.% eines oder mehrerer N-Vinylamide der allgemeinen Formel I und 0 bis 25 Gew.% Einheiten einer anderen polymerisierbaren Verbindung oder mehrerer derartiger Verbindungen copolymerisiert

werden.

9. Verfahren nach Anspruch 7 und/oder 8, dadurch gekennzeichnet, daß bei der Copolymerisation keine Verbindungen aus der Gruppe der anderen polymerisierbaren Verbindungen eingesetzt werden.

10. Verfahren nach einem oder mehreren der Ansprüche 7 bis 9, dadurch gekennzeichnet, daß 0,1 bis 10 Gew.% einer polymerisierbaren bor- und/oder silizium-organischen Verbindung eingesetzt werden.

11. Verfahren nach einem oder mehreren der Ansprüche 7 bis 10, dadurch gekennzeichnet, daß bis zu 50 Gew.% der Pyridyl-, Chinolyl-, Isochinolyl- oder Pyrazinyl-Verbindung durch eine heterocyclische 5-Ringverbindung mit einer polymerisierbaren olefinischen Gruppe und mindestens einem protonierbaren Stickstoffatom im Ring oder durch mehrere derartiger Verbindungen ersetzt werden.

12. Verfahren zur Abtrennung saurer Substanzen aus wäßrigen Lösungen durch Sorption an einem Austauscherharz und anschließende Elution mit einem organischen Lösungsmittel, dadurch gekennzeichnet, daß als Austauscherharz ein Copolymerisat nach einem oder mehreren der Ansprüche 1 bis 6 verwendet wird.

13. Verwendung eines Copolymerisats eines oder mehrerer der Ansprüche 1 bis 6 zur Sorption von Schwermetallionen aus wäßriger Lösung.

**Patentansprüche** (für den Vertragsstaat AT)

1. Verfahren zur Herstellung eines vernetzten, perlförmigen, porösen Copolymerisats durch Copolymerisation, dadurch gekennzeichnet, daß 71,4 bis 99,9 Gew.% einer oder mehrerer eine einzige polymerisierbare olefinische Gruppe enthaltenden Pyridyl-, Chinolyl-, Isochinolyl- oder Pyrazinyl-Verbindungen, 0,1 bis 28,6 Gew.% eines oder mehrerer n-valenter Vernetzer und 0 bis 25 Gew.% einer oder mehrerer polymerisierbarer silizium- und/oder bor-organischer Verbindungen und, bezogen auf 100 Gew.% der Summe der vorgenannten Verbindungen, 5 bis 350 Gew.% eines oder mehrerer N-Vinyl-amide der Formel I und 0 bis 40 Gew.% einer oder mehrerer anderer polymerisierbarer Verbindungen, wobei n eine Zahl gleich oder größer als 2 ist, nach dem Verfahren der Perlpolymerisation copolymerisiert werden.

2. Verfahren nach Anspruch 1, dadurch gekennzeichnet, daß 80 bis 99 Gew.% einer eine einzige polymerisierbare olefinische Gruppe enthaltenden Pyridyl-, Chinolyl-, Isochinolyl- oder Pyrazinyl-Verbindung oder mehrerer derartiger Verbindungen, 1 bis 20 Gew.% eines Vernetzers oder mehrerer derartiger Vernetzer, 0 bis 19 Gew.% einer oder mehrerer polymerisierbarer bor- und/oder silizium-organischer Verbindungen und, bezogen auf 100 % der Summe der vorgenannten Verbindungen, 10 bis 250 Gew.% eines oder mehrerer N-Vinyl-amide der allgemeinen Formel I und 0 bis 25 Gew.% Einheiten einer anderen polymerisierbaren Verbindung oder mehrerer derartiger Verbindungen copolymerisiert werden.

3. Verfahren nach Anspruch 1 und/oder 2, dadurch gekennzeichnet, daß bei der Copolymerisation keine Verbindungen aus der Gruppe der anderen polymerisierbaren Verbindungen eingesetzt werden.

4. Verfahren nach einem oder mehreren der Ansprüche 1 bis 3, dadurch gekennzeichnet, daß 0,1 bis 10 Gew.% einer polymerisierbaren bor- und/oder silizium-organischen Verbindung eingesetzt werden.

5. Verfahren nach einem oder mehreren der Ansprüche 1 bis 3, dadurch gekennzeichnet, daß bis zu 50 Gew.% der Pyridyl-, Chinolyl-, Isochinolyl- oder Pyrazinyl-Verbindung durch eine heterocyclische 5-Ringverbindung mit einer polymerisierbaren olefinischen Gruppe und mindestens einem protonierbaren Stickstoffatom im Ring oder durch mehrere derartiger Verbindungen ersetzt werden.

6. Verfahren zur Abtrennung saurer Substanzen aus wäßrigen Lösungen durch Sorption an einem Austauscherharz und anschließende Elution mit einem organischen Lösungsmittel, dadurch gekennzeichnet, daß als Austauscherharz ein Copolymerisat verwendet wird, das nach einem oder mehreren der Ansprüche 1 bis 5 herstellbar ist.

7. Verwendung eines Copolymerisats, das nach einem oder mehreren der Ansprüche 1 bis 5 herstellbar ist, zur Sorption von Schwermetallionen aus wäßriger Lösung.

**Claims** (for the Contracting States : BE, CH, DE, FR, GB, IT, LI, NL, SE)

1. Crosslinked bead-like porous copolymer containing 71.4 to 99.9 % by weight of recurring units of a pyridyl, quinolyl, isoquinolyl or pyrazinyl compound containing a single polymerisable olefinic group or of several such compounds, 0.1 to 28.6 % by weight of units of an n-valent crosslinking agent or of several n-valent crosslinking agents and 0 to 25 % by weight of units of a polymerisable organosilicon and/or organoboron compound or of several such compounds and, based on 100 % by weight of the sum of the above-mentioned units, 5 to 350 % by weight of units of an N-vinyl-amide of the general formula I

$$CH_2{=}CH{-}N(R^1){-}C(R^2) = 0,$$

wherein $R^1$ denotes hydrogen, methyl or ethyl and $R^2$ denotes hydrogen or $(C_1$-$C_3)$-alkyl, or of several such N-vinylamides, and 0 to 40 % by weight of units of another polymerisable compound or of several such compounds, n being a number equal to or greater than 2 and it being possible for the pyridyl,

quinolyl, isoquinolyl or pyrazinyl compound also additionally to have one other or several other substituents.

2. Copolymer according to Claim 1, containing 80 to 99 % by weight of recurring units of a pyridyl, quinolyl, isoquinolyl or pyrazinyl compound containing a single polymerisable olefinic group of several such compounds, 1 to 20 % by weight of units of an n-valent crosslinking agent or of several n-valent crosslinking agents, and 0 to 19 % by weight of units of a polymerisable organosilicon and/or organoboron compound or of several such compounds, and, based on 100 % by weight of the sum of the abovementioned units, 10 to 250 % by weight of units of an N-vinyl-amide of the general formula I or of several such N-vinyl-amides, and 0 to 25 % by weight of units of another polymerisable compound or of several such compounds.

3. Copolymer according to Claim 1 and/or 2, characterised in that it contains 0.1 to 10 % by weight of units of a polymerisable organoboron and/or organosilicon compound.

4. Copolymer according to one or more of Claims 1 to 3, characterised in that it contains no units of other polymerisable compounds.

5. Copolymer according to one or more of Claims 1 to 4, characterised in that it contains recurring units of vinyl-pyridine.

6. Copolymer according to one or more of Claims 1 to 5, characterised in that up to 50 % by weight of the units of the pyridyl, quinolyl, isoquinolyl or pyrazinyl compound can be replaced by units of a heterocyclic 5-membered ring compound which contains a polymerisable olefinic group and has at least one protonatable nitrogen atom in the ring, or of several such compounds.

7. Process for the preparation, by copolymerisation, of the crosslinked bead-like porous copolymer described in Claims 1 to 6, characterised in that 71.4 to 99.9 % by weight of one or more pyridyl, quinolyl, isoquinolyl or pyrazinyl compounds containing a single polymerisable olefinic group, 0.1 to 28.6 % by weight of one or more n-valent crosslinking agents and 0 to 25 % by weight of one or more polymerisable organosilicon and/or organoboron compounds, and, based on 100 % by weight of the sum of the abovementioned compounds, 5 to 350 % by weight of one or more N-vinyl-amides of the formula I and 0 to 40 % by weight of one or more other polymerisable compounds, n being a number equal to or greater than 2, are copolymerised by the bead polymerisation process.

8. Process according to Claim 7, characterised in that 80 to 99 % by weight of a pyridyl, quinolyl, isoquinolyl or pyrazinyl compound containing a single polymerisable olefinic group, or of several such compounds, 1 to 20 % by weight of a crosslinking agent or of several such crosslinking agents, 0 to 19 % by weight of one or more polymerisable organoboron and/or organosilicon compounds and, based on 100 % of the sum of the abovementioned compounds, 10 to 250 % by weight of one or more N-vinyl-amides of the general formula I and 0 to 25 % by weight of units of another polymerisable compound or several such compounds, are copolymerised.

9. Process according to Claim 7 and/or 8, characterised in that no compounds from the group of other polymerisable compounds are used in the copolymerisation.

10. Process according to one or more of Claims 7 to 9, characterised in that 0.1 to 10 % by weight of a polymerisable organoboron and/or organosilicon compound is used.

11. Process according to one or more of Claims 7 to 10, characterised in that up to 50 % by weight of the pyridyl, quinolyl, isoquinolyl or pyrazinyl compound are replaced by a heterocyclic 5-membered ring compound with a polymerisable olefinic group and at least one protonatable nitrogen atom in the ring, or by several such compounds.

12. Process for removing acid substances from aqueous solutions by sorption on an exchanger resin and subsequent elution with an organic solvent, characterised in that a copolymer according to one or more of Claims 1 to 6 is used as the exchanger resin.

13. Use of a copolymer of one or more of Claims 1 to 6 for sorption of heavy metal ions from aqueous solution.

**Claims** (for the Contracting State AT)

1. Process for preparing a crosslinked bead-like porous copolymer by copolymerisation, characterised in that 71.4 to 99.9 % by weight of one or several pyridyl, quinolyl, isoquinolyl or pyrazinyl compounds containing a single polymerisable olefinic group, 0.1 to 28.6 % by weight of one or of several n-valent crosslinking agents and 0 to 25 % by weight of one or several polymerisable organosilicon and/or organoboron compounds and, based on 100 % by weight of the sum of the above-mentioned compounds, 5 to 350 % by weight of one or several N-vinylamides of the formula I and 0 to 40 % by weight of one or several other polymerisable compounds, n being a number equal to or greater than 2, are copolymerised according to the bead polymerisation process.

2. Process according to Claim 1, characterised in that 80 to 99 % by weight of a pyridyl, quinolyl, isoquinolyl or pyrazinyl compound containing a single polymerisable olefinic group or several such compounds, 1 to 20 % by weight of crosslinking agent or of several such crosslinking agents, 0 to 19 % by weight of one or several polymerisable organosilicon and/or organoboron compounds and, based on 100 % by weight of the sum of the abovementioned compounds, 10 to 250 % by weight of one or several

N-vinyl-amides of the general formula I, and 0 to 25 % by weight of units of another polymerisable compound or of several such compounds are copolymerised.

3. Process according to Claim 1 and/or 2, characterised in that no compounds from the group of other polymerisable compounds are used in the copolymerisation.

4. Process according to one or more of Claims 1 to 3, characterised in that 0.1 to 10 % by weight of a polymerisable organoboron and/or organosilicon compound are used.

5. Process according to one or more of Claims 1 to 3, characterised in that up to 50 % by weight of the pyridyl, quinolyl, isoquinolyl or pyrazinyl compound are replaced by a heterocyclic 5-membered ring compound with a polymerisable olefinic group and at least one protonatable nitrogen atom in the ring, or by several such compounds.

6. Process for removing acid substances from aqueous solutions by sorption on an exchanger resin and subsequent elution with an organic solvent, characterised in that a copolymer preparable according to one or more of Claims 1 to 5 is used as the exchanger resin.

7. Use of a copolymer preparable according to one or more of Claims 1 to 5 for sorption of heavy metal ions from aqueous solution.

**Revendications** (pour les Etats contractants : BE, CH, DE, FR, GB, IT, LI, NL, SE)

1. Copolymère poreux réticulé en perles, caractérisé en ce qu'il contient de 71,4 à 99,9 % en poids de motifs répétés d'un composé pyridylique, quinolylique, isoquinolylique ou pyrazinylique contenant un seul radical éthylénique polymérisable, ou de plusieurs composés de ce genre, de 0,1 à 28,6 % en poids de motifs d'un réticulant de fonctionnalité égale à n, ou de plusieurs réticulants de ce genre, ainsi que de 0 à 25 % en poids de motifs d'un composé organosilicique et/ou organoborique polymérisable, ou de plusieurs composés de ce genre, et pour 100 % en poids de l'ensemble des motifs qui viennent d'être cités de 5 à 350 % en poids de motifs d'un N-vinylamide répondant à la formule générale :

$$CH_2{=}CH{-}N(R^1){-}C(R^2) = 0 \qquad (I)$$

dans laquelle $R^1$ représente l'hydrogène ou un radical méthyle ou éthyle et $R^2$ l'hydrogène ou un radical alkyle contenant de 1 à 3 atomes de carbone, ou de plusieurs N-vinylamides de ce genre, et de 0 à 40 % en poids de motifs d'un ou de plusieurs autres composés polymérisables, n désignant un nombre au moins égal à 2, et le composé pyridylique, quinolylique, isoquinolylique ou pyrazinylique pouvant en outre porter un ou plusieurs substituants supplémentaires.

2. Copolymère selon la revendication 1 caractérisé en ce qu'il contient de 80 à 99 % en poids de motifs répétés d'un composé pyridylique, quinolylique, isoquinolylique ou pyrazinylique contenant un seul radical éthylénique polymérisable, ou de plusieurs composés de ce genre, de 1 à 20 % en poids de motifs d'un ou plusieurs réticulants de fonctionnalité égale à n, ainsi que de 0 à 19 % en poids de motifs d'un ou de plusieurs composés organosiliciques et/ou organoboriques polymérisables, et, pour 100 % en poids de l'ensemble des motifs qui viennent d'être cités, de 10 à 250 % en poids de motifs d'un N-vinylamide de formule générale I ou de plusieurs N-vinylamides de ce genre et de 0 à 25 % en poids de motifs d'un ou de plusieurs autres composés polymérisables.

3. Copolymère selon l'une des revendications 1 et 2, caractérisé en ce qu'il contient de 0,1 à 10 % en poids de motifs d'un composé organoborique et/ou organosilicique polymérisable.

4. Copolymère selon l'une quelconque des revendications 1 à 3, caractérisé en ce qu'il ne contient pas de motifs d'autres composés polymérisables.

5. Copolymère selon l'une quelconque des revendications 1 à 4, caractérisé en ce qu'il contient des motifs répétés de vinylpyridine.

6. Copolymère selon l'une quelconque des revendications 1 à 5, caractérisé en ce que des motifs du composé pyridylique, quinolylique, isoquinolylique ou pyrazinylique sont remplacés, en une proportion pouvant aller jusqu'à 50 % en poids, par des motifs d'un composé hétérocyclique à noyau pentagonal qui contient un radical éthylénique polymérisable et dont le noyau renferme au moins un atome d'azote protonable, ou des motifs de plusieurs composés de ce genre.

7. Procédé de préparation du copolymère poreux réticulé en perles selon l'une quelconque des revendications 1 à 6, par copolymérisation, procédé caractérisé en ce qu'on copolymérise, par la méthode de polymérisation en perles de 71,4 à 99,9 % en poids d'un ou de plusieurs composés pyridyliques, quinolyliques, isoquinolyliques ou pyrazinyliques contenant un seul radical éthylénique polymérisable, de 0,1 à 28,6 % en poids d'un ou de plusieurs réticulants de fonctionnalité égale à n ainsi que de 0 à 25 % en poids d'un ou de plusieurs composés organosiliciques et/ou organoboriques polymérisables, et, pour 100 % en poids de l'ensemble des composés qui viennent d'être cités de 5 à 350 parties en poids d'un ou de plusieurs N-vinylamides de formule I et 0 à 40 % en poids d'un ou de plusieurs autres composés polymérisables, n désignant un nombre au moins égal à 2.

8. Procédé selon la revendication 7 caractérisé en ce qu'on copolymérise de 80 à 99 % en poids d'un composé pyridylique, quinolylique, isoquinolylique ou pyrazinylique contenant un seul radical éthylénique polymérisable, ou plusieurs composés de ce genre, de 1 à 20 % en poids d'un ou de plusieurs

réticulants, de 0 à 19 % en poids d'un ou de plusieurs composés organoboriques et/ou organosiliciques polymérisables et, pour 100 % de l'ensemble des composés qui viennent d'être cités, de 10 à 250 % en poids d'un ou de plusieurs N-vinylamides de formule générale I et de 0 à 25 % en poids d'un ou de plusieurs autres composés polymérisables.

9. Procédé selon l'une des revendications 7 et 8, caractérisé en ce que, dans la copolymérisation, on n'utilise pas de composés du groupe des autres composés polymérisables.

10. Procédé selon l'une quelconque des revendications 7 à 9, caractérisé en ce qu'on met en jeu de 0,1 à 10 % en poids d'un composé organoborique et/ou organosilicique polymérisable.

11. Procédé selon l'une quelconque des revendications 7 à 10, caractérisé en ce qu'on remplace une partie, pouvant représenter jusqu'à 50 % en poids, du composé pyridylique, quinolylique, isoquinolylique ou pyrazinylique par un composé hétérocyclique à noyau pentagonal qui contient un radical éthylénique polymérisable et dont le noyau renferme au moins un atome d'azote protonable, ou par plusieurs composés de ce genre.

12. Procédé pour séparer des substances acides de solutions aqueuses, par sorption sur une résine échangeuse, puis élution au moyen d'un solvant organique, procédé caractérisé en ce qu'on utilise, comme résine échangeuse, un copolymère selon l'une quelconque des revendications 1 à 6.

13. Application d'un copolymère selon l'une quelconque des revendications 1 à 6 pour la sorption d'ions de métaux lourds à partir d'une solution aqueuse.

**Revendications** (pour l'Etat contractant AT)

1. Procédé pour préparer un copolymère poreux réticulé en perles, par copolymérisation, procédé caractérisé en ce qu'on copolymérise, par la méthode de polymérisation en perles, de 71,4 à 99,9 % en poids d'un ou de plusieurs composés pyridyliques, quinolyliques, isoquinolyliques ou pyrazinyliques contenant un seul radical éthylénique polymérisable, de 0,1 à 28,6 % en poids d'un ou de plusieurs réticulants de fonctionnalité égale à n ainsi que de 0 à 25 % en poids d'un ou de plusieurs composés organosiliciques et/ou organoboriques polymérisables, et, pour 100 % en poids de l'ensemble des composés qui viennent d'être cités, de 5 à 350 parties en poids d'un ou de plusieurs N-vinylamides de formule I et de 0 à 40 % en poids d'un ou de plusieurs autres composés polymérisables, n désignant un nombre au moins égal à 2.

2. Procédé selon la revendication 1 caractérisé en ce qu'on copolymérise de 80 à 99 % en poids d'un composé pyridylique, quinolylique, isoquinolylique ou pyrazinylique contenant un seul radical éthylénique polymérisable, ou plusieurs composés de ce genre, de 1 à 20 % en poids d'un ou de plusieurs réticulants, de 0 à 19 % en poids d'un ou de plusieurs composés organoboriques et/ou organosiliciques polymérisables et, pour 100 % de l'ensemble des composés qui viennent d'être cités, de 10 à 250 % en poids d'un ou de plusieurs N-vinylamides de formule générale I et de 0 à 25 % en poids d'un ou de plusieurs autres composés polymérisables.

3. Procédé selon l'une des revendications 1 et 2, caractérisé en ce que, dans la copolymérisation, on n'utilise pas de composés du groupe des autres composés polymérisables.

4. Procédé selon l'une quelconque des revendications 1 à 3, caractérisé en ce qu'on met en jeu de 0,1 à 10 % en poids d'un composé organoborique et/ou organosilicique polymérisable.

5. Procédé selon l'une quelconque des revendications 1 à 3, caractérisé en ce qu'on remplace une partie, pouvant représenter jusqu'à 50 % en poids, du composé pyridylique, quinolylique, isoquinolylique ou pyrazinylique par un composé hétérocyclique à noyau pentagonal qui contient un radical éthylénique polymérisable et dont le noyau renferme au moins un atome d'azote protonable, ou par plusieurs composés de ce genre.

6. Procédé pour séparer des substances acides de solutions aqueuses, par sorption sur une résine échangeuse, puis élution au moyen d'un solvant organique, procédé caractérisé en ce qu'on utilise, comme résine échangeuse, un copolymère qui a été préparé selon une ou plusieurs des revendications 1 à 5.

7. Application d'un copolymère préparé selon l'une quelconque des revendications 1 à 5 pour la sorption d'ions de métaux lourds à partir d'une solution aqueuse.